# EUROPÄISCHE PATENTANMELDUNG

(11) **EP 1 526 376 A1**
(43) Veröffentlichungstag der Anmeldung: **27.04.2005**
(21) Anmeldenummer: 04024561.5
(22) Anmeldetag: 14.10.2004
(51) Int. Cl.: G01N 23/203, G01G 9/00

(54) **Verfahren zum Bestimmen eines Flächengewichtes und/oder einer chemischen Zusammensetzung einer geförderten Materialprobe und Vorrichtung hierfür**

(30) Priorität: 21.10.2003 DE 10348834; 03.09.2004 DE 102004042769
(71) Anmelder: Mahlo GmbH & Co. KG, 93342 Saal/Donau (DE)
(72) Erfinder: Zerle, Ludwig, Dr., 94327 Bogen (DE)
(74) Vertreter: Kruspig, Volkmar, Dipl.-Ing.

(57) **Zusammenfassung**

Die Erfindung betrifft ein Verfahren zum Bestimmen eines Flächengewichtes und/oder einer chemischen Zusammensetzung einer geförderten Materialprobe. Hierbei wird aus der Analyse eines aus einem von einer Materialprobe gestreuten Anteils einer einfallenden ionisierenden Strahlung, insbesondere Röntgenstrahlung, ein dem Flächengewicht der Materialprobe und/oder der chemischen Zusammensetzung der Materialprobe entsprechendes Detektorsignal erzeugt und zur Bestimmung des Flächengewichtes und/oder der chemischen Zusammensetzung der Materialprobe genutzt. Eine Vorrichtung zum Bestimmen eines Flächengewichtes und/oder einer chemischen Zusammensetzung einer Materialprobe weist einen einseitig bezüglich der Materialprobe angeordneten kompakten Messkopf (10) auf. Dieser enthält eine Röntgenstrahlungsquelle (20) und eine in den Messkopf integrierte Detektoranordnung (30) aus mindestens einem Röntgendetektor in Verbindung mit einer Spannungsversorgung und einer Auswerteeinheit.

## Beschreibung

Die Erfindung betrifft ein Verfahren zum Bestimmen eines Flächengewichtes und/oder einer chemischen Zusammensetzung einer geförderten Materialprobe nach dem Oberbegriff des Anspruchs 1 und eine Vorrichtung zum Ausführen des Verfahrens nach dem Oberbegriff des Anspruchs 9.

Zum Bestimmen eines Flächengewichtes und/oder einer chemischen Zusammensetzung von Materialproben oder -bahnen in mit zum Teil hohen Geschwindigkeiten betriebenen Förder- und Produktionsanlagen werden nach dem Stand der Technik Absorptionsmessungen unter Verwendung ionisierender Strahlung, insbesondere Röntgen-, Gamma- oder Teilchenstrahlung ausgeführt. Hierbei werden die zu prüfenden Bahnen oder Proben zwischen einer Strahlenquelle und einer gegenüber der Strahlenquelle gelegenen Detektoranordnung hindurchgeführt und in einer Transmissionsmessung die Stärke der Strahlungsabsorption bestimmt. Diese hängt von dem Flächengewicht der Bahnen und Proben ab, sodass mit diesem bekannten Verfahren und den entsprechenden Vorrichtungen die erwähnten Eigenschaften der Proben und Bahnen berührungslos gemessen werden können.

Eine weitere Möglichkeit, das Flächengewicht einer Warenbahn oder eines flächigen Materials zu messen, besteht darin, gestreute Strahlung zu detektieren. So wird beispielsweise durch die Firmen NDC Infrared Engineering und Adaptive Technologies bei ihren Produkten dieses Verfahren angewendet, indem dort rückgestreute Photonen einer Gamma-Strahlenquelle, beispielsweise Photonen der 59 keV-Linie des Isotops Am 241, detektiert werden.

Ein systematischer Messfehler tritt bei diesem Verfahren auf, wenn sich der Abstand zwischen dem Ort, an dem die Teilchen des einfallenden Strahls gestreut werden, und dem Ort des Detektors ändert. Eine solche Abstandsvariation kann durch zufällige Flatterbewegungen der Warenbahn auftreten und findet auch immer dann statt, wenn sich die Dicke des Messguts verändert. Es kommt dabei aus rein geometrischen Gründen zu einer Beeinflussung des Messsignals, die, falls dies nicht durch zusätzliche, unabhängige Messungen korrigiert wird, zu einer fehlerhaften Wiedergabe des Flächengewichtswertes führt. Dieser systematische Effekt kann zwar in Grenzen gehalten werden, wenn der Abstand zwischen dem Messgut und dem Detektor groß gewählt wird. Er darf aber aus Gründen einer möglichst hohen Nachweiseffizienz der gestreuten Strahlung und dem damit verbundenen geringen statistischen Fehler des Detektors bei gleichzeitig geringst möglicher Stärke der Quelle des einfallenden Strahls nicht zu groß werden. Es ist daher wichtig, zur wirtschaftlichen Erzielung eines geringen Messfehlers eine Korrektur der durch Abstandsvariationen hervorgerufenen Ungenauigkeiten durch zusätzliche Messungen vorzunehmen.

Bei allen bekannten Verfahren zur Flächengewichtsmessung, bei denen ionisierende Strahlung verwendet wird, stammt diese aus dem Zerfall radioaktiver Isotope. In diesem Fall unterliegt der Betreiber der Strahlenschutzverordnung, die von dem Betreiber auch während des Stillstands der Anlage Ruhezeiten sowie aufwändige Schutzmassnahmen fordert.

Die wirtschaftliche Verfügbarkeit und die natürlichen Eigenschaften radioaktiver Nuklide und ihrer ionisierenden Strahlung, beispielsweise Halbwertszeit, Art und Energieverteilung, schränken die Anzahl der industriell nutzbaren Präparate stark ein. Zudem kann mit der Verwendung eines einzigen radioaktiven Nuklids auch nur ein begrenzter Einsatzbereich abgedeckt werden. So eignet sich zum Beispiel die Betastrahlung des häufig verwendeten Nuklids Kr 85 mit der Endpunktsenergie von 687.4 keV aufgrund seines Absorptionsverhaltens gut zur Bestimmung von Flächengewichten bis ca. 1000 g/m². Höhere Flächengewichte sind damit nicht mehr zufriedenstellend erfassbar und werden vorzugsweise mit dem Nuklid Sr 90 gemessen, bei dem im Folgezerfall des Y 90 höherenergetische und somit durchdringendere Betastrahlung mit einer Endpunktsenergie von 2280.1 keV auftritt.

Es besteht somit die Aufgabe, ein Verfahren zum Bestimmen des Flächengewichtes und/oder einer chemischen Zusammensetzung einer Materialprobe und eine Vorrichtung anzugeben, die die genannten Nachteile weitgehend vermeiden, im Rahmen einer großtechnischen und hochproduktiv arbeitenden Fertigungsanlage vorteilhaft anzuwenden, in einfacher Weise zu integrieren ist und eine präzise Messung der erforderlichen Materialeigenschaften auch unter physikalisch ungünstigen Bedingungen einer Großfertigung erlaubt.

Die Aufgabe wird mit einem Verfahren mit den Merkmalen des Anspruchs 1 und einer Vorrichtung mit den Merkmalen des Anspruchs 9 gelöst, wobei die Unteransprüche zweckmäßige Ausgestaltungen und Erweiterungen des erfindungsgemäßen Verfahrens und der Vorrichtung enthalten.

Das Verfahren zum Bestimmen eines Flächengewichtes und/oder einer chemischen Zusammensetzung einer geförderten Materialprobe ist erfindungsgemäß dadurch gekennzeichnet, dass aus der Analyse eines aus einem von der Materialprobe gestreuten Strahlanteils einer einfallenden Röntgenstrahlung das Flächengewicht der Materialprobe und/oder deren chemische Zusammensetzung bestimmt wird.

Im Gegensatz zu dem im Stand der Technik genutzten Prinzips einer Transmissionsmessung der Röntgenstrahlung werden erfindungsgemäß Streueffekte innerhalb der Probe genutzt, bei denen die einfallende Strahlung in das Probenmaterial eindringt und durch das Material rückgestreut wird. Dabei enthält der rückgestreute Strahlungsanteil Informationen über das Flächengewicht der Probe und deren chemische Zusammensetzung und wird von einem Detektor empfangen und das Detektorsignal ausgewertet.

Hierbei wird zweckmäßigerweise die Röntgenstrahlung aus einer Strahlungsquelle auf einen Strahlfleck der Materialprobe gerichtet und die in der Materialprobe aufgrund innerer Streuprozesse erzeugte Streustrahlung von der Detektoranordnung erfasst und ausgewertet. Da die Röntgenstrahlung mit einer charakteristischen Eindringtiefe die Oberfläche des Materials durchdringt, enthält somit die aus der Materialprobe zurückgestreute Streustrahlung Informationen aus der Tiefe der Materialprobe, die analysiert und beurteilt werden können.

Hierzu wird in einer vorteilhaften Ausführungsform des Verfahrens die Streustrahlung durch die Detektoranordnung mehrkanalig und energieselektiv registriert und spektral ausgewertet. Damit werden die für die Materialstruktur, insbesondere für die in dem Material vorliegende stoffliche Zusammensetzung charakteristischen Wechselwirkungen zwischen Strahlung und Material registriert, wodurch das Flächengewicht bzw. die chemische Zusammensetzung des Materials ermittelt werden kann.

Zu einer Positionsverschiebung des Streuflecks führende Veränderungen der Warenlage der Materialprobe werden bei einer weiteren Fortbildung des Verfahrens durch vergleichende Messungen in einer mehrteiligen Detektoranordnung registriert und für eine Messwertkorrektur verwendet. Die Messwertkorrektur ist insbesondere bei schnell geförderten Materialbahnen, die transportbedingt zu einem erheblichen Flattern neigen, notwendig.

Bei einer zweckmäßigen Erweiterung des erfindungsgemäßen Verfahrens wird die von der Umgebungsatmosphäre erzeugte Streustrahlung detektiert und aus dem Detektionsergebnis Umweltgrößen, insbesondere Lufttemperatur, Luftdruck bzw. Luftfeuchtigkeit bestimmt und zu einer Korrektur des Messergebnisses verwendet.

Der gestreute Anteil der Röntgenstrahlung kann sowohl die allgemeine Streustrahlung oder die innerhalb der Probe erzeugte charakteristische Röntgenstrahlung allein oder in einer Mischung sein.

Eine Vorrichtung zum Bestimmen eines Flächengewichtes und/oder einer chemischen Zusammensetzung der Materialprobe ist durch einen einseitig bezüglich der Materialprobe angeordneten kompakten Messkopf gekennzeichnet. Diese enthält einen in einem Winkel auf die Materialprobe gerichtete Strahlungsquelle für elektromagnetische ionisierende Strahlung und einen in einem Streuwinkel angeordnete mehrteilige Detektoranordnung in Verbindung mit einer Spannungsversorgung und einer Auswerteeinheit. Die Strahlungsquelle ist demnach so angeordnet, dass die in der Materialprobe erzeugte Streustrahlung nicht in die Strahlquelle zurück, sondern in eine gewählte Raumrichtung abgegeben und dort in einer an sich beliebigen Entfernung zur Strahlenquelle detektiert wird, ohne dass die Strahlenquelle den Detektor direkt beeinflusst.

Weiterhin weist der Messkopf mindestens einen Umweltsensor, insbesondere für eine Druck-, Temperatur- bzw. Feuchtigkeitsmessung, auf. Der Messkopf ist somit für eine parallele Messung von die Messgenauigkeit bzw. die Messresultate beeinflussenden Umweltparametern ausgelegt.

Die Detektoranordnung kann zweckmäßigerweise als ein mehrkanaliger energiesensitiver Zählratendetektor ausgeführt sein. Ein derartiger Detektor ist zum Registrieren eines Energiespektrums geeignet und ermöglicht somit eine Elementaranalyse der Materialbahn.

Die Detektoranordnung ist vorteilhafterweise mindestens aus einem bezüglich der Strahlungsquelle in einem ersten auf die Warenlage sensitiven Streuwinkel angeordneten ersten Detektor und einem bezüglich der Strahlungsquelle in einem zweiten auf die Warenlage sensitiven Streuwinkel angeordneten zweiten Detektor ausgebildet. Die durch Veränderungen der Warenlage hervorgerufenen Verschiebungen des Streuflecks schlagen sich in veränderlichen Streuwinkeln nieder und werden durch den ersten bzw. zweiten Detektor registriert, wobei auf die veränderte Warenlage rückgeschlossen werden kann.

Zur Befestigung der erfindungsgemäßen Vorrichtung genügt eine die Fördereinrichtung für die Materialproben übergreifende Traverse, von der aus nur eine Seite des zu messenden flächigen Materials erfassbar ist.

Zweckmäßigerweise ist auf der Rückseite der Materialprobe eine strahlungsabsorbierende Abschirmung angeordnet. Sie muss so angeordnet sein, dass Streustrahlung, die entgegen der Richtung des einfallenden Strahls austritt, nicht in den Detektor gelangen kann.

Das erfindungsgemäße Verfahren und eine beispielhafte Ausführungsform eines erfindungsgemäßen Messkopfes wird aus der angefügten Figur ersichtlich.

Diese zeigt eine Materialprobe 5, auf deren Oberseite ein Messkopf 10 angeordnet ist. Der Messkopf weist einen Grundkörper 11 auf, in den eine Röntgenstrahlungsquelle 20 mit einer Anordnung von Blenden 21 und eine Detektoranordnung 30 integriert ist. Der Messkopf weist zusätzlich eine Anordnung von Umweltsensoren 40 auf, mit denen die Umweltbedingungen, insbesondere die Umweltgrößen Druck, Temperatur und Luftfeuchte, in der unmittelbaren Umgebung der Materialprobe 5 und/oder der der Materialprobe zugewandten Seite des Messkopfes bestimmt werden können. Eine Spannungsversorgung 51 für die Röntgenquelle und eine Datenaufnahmeeinheit 52 für die Detektoranordnung sind ebenfalls im Messkopf integriert. Die Materialprobe wird in diesem Ausführungsbeispiel mittels einer Förderanlage unter dem Messkopf hindurch bewegt. Weiterhin weist die dargestellte Anordnung eine im wesentlichen strahlungsundurchlässige Abschirmung 70 auf der Unterseite auf der Materialprobe auf.

Die Röntgenstrahlung wird von der Röntgenstrahlungsquelle 20 beispielsweise in Form von Röntgenbremsstrahlung erzeugt und emittiert und mit einem durch die Blendenanordnung 21 erzeugten definierten Strahlquerschnitt durch ein Strahlfenster 12 auf die Materialprobe 5 gerichtet. Auf der Oberfläche der Probe und in deren Inneren wird in einem Strahlfleck 3 ein gewisser Anteil der einfallenden Strahlung aufgrund eines Zusammenspiels unterschiedlicher Streuprozesse innerhalb der Probe gestreut und aus der Materialprobe in Richtung des Messkopfes 10 zurückgeworfen. Die Streuprozesse resultieren zum einen aus der inneren Beschaffenheit der Materialprobe, insbesondere deren Dichte und somit deren Flächengewicht.

Weiterhin führt die Einwirkung der Röntgenstrahlung zu einer teilweisen Ionisierung innerer Elektronenschalen und daraus folgenden Emissionen charakteristischer elementtypischer Röntgenspektren, beispielsweise der bekannten K- und L-Serien mit den elementtypischen Wellenlängen der K_{α}- bzw. L_{α}-Linien. Unter Anwendung des Moseley-Gesetzes ist durch Auswertung dieser Linien eine Elementaranalyse der Materialprobe möglich. Wegen der hohen Durchdringungsfähigkeit der verwendeten Röntgenstrahlung können verwertbare Signale auch aus einer größeren Materialtiefe gewonnen werden.

Die Detektoranordnung detektiert die sekundäre rückgestreute Röntgenstrahlung und gibt die dabei erzeugten Messsignale an eine nicht dargestellte Auswerteeinheit aus. In Abhängigkeit von den im einzelnen vorliegenden Einsatzanforderungen kann die Detektoranordnung 30 eine Reihe jeweils nach Einsatzart verschiedener Komponenten enthalten bzw. die Datenaufnahmeeinheit 52 für spezielle Auswerteprozeduren der gelieferten Messsignale eingerichtet sein. Für eine Messung des Flächengewichts ist prinzipiell eine einfache von der Energie der Röntgenphotonen unabhängig arbeitende Zähleranordnung, im einfachsten Fall eine Zählrohranordnung, geeignet, deren Zählrate von der Datenaufnahmeeinheit bestimmt wird. Im Allgemeinen hängt die Zählrate der gestreuten Röntgenstrahlung linear von dem Flächengewicht der Materialprobe ab.

Eine Detektierung des charakteristischen Röntgenspektrums der sekundären gestreuten Röntgenstrahlung erfordert eine energiesensitive zählratenbestimmende Detektoranordnung mit einer die energieabhängigen Zählraten bestimmenden Auswerteeinheit. Eine derartige Detektoranordnung kann ebenfalls zur Bestimmung des Flächengewichts der Materialprobe verwendet werden. In diesem Fall wird die Auswerteeinheit so konfiguriert, dass eine Gesamtzählrate als Summe über alle energieabhängigen Einzelzählraten bestimmt wird.

Effekte, die durch eine Variation der Lage der Materialprobe, der Temperatur oder durch eine Selbstabsorption zustande kommen, werden kompensiert. Durch eine Kalibrierung mit einem oder mehreren Kalibrierungsnormalen, deren Flächengewicht und/oder chemische Zusammensetzung bekannt ist, kann ein funktionaler Zusammenhang zwischen Flächengewicht und/oder chemischer Zusammensetzung ermittelt werden. Die Kenntnis der ursprünglichen Intensität der primären Röntgenstrahlung ist nicht notwendig. Wichtig ist lediglich die Konstanz der Stärke der einfallenden Strahlung oder die Kenntnis ihrer zeitlichen Änderung.

Im Falle der allgemeinen Streustrahlung, die für einen einfallenden Strahl aus Rayleigh- oder Compton-Streustrahlung besteht, hängt die Intensität des gestreuten Anteils wesentlich von der Anzahl der Elektronen in dem vom einfallenden Strahl durchdrungenen Materialvolumen ab. Dies gilt vor allem für Materialien mit ähnlicher chemischer Zusammensetzung. Die in der Detektoranordnung 30 nachgewiesene Menge an Rayleigh- und Compton-Streustrahlung ist somit bei einer gleichbleibenden Strahlgeometrie ein Maß für das Flächengewicht des Materials.

Die Intensität der aus dem Streufleck gestreuten Strahlung, die aufgrund charakteristischer Strahlung zustande kommt, hängt stark von der Energieverteilung der einfallenden Strahlung und der elementaren Zusammensetzung des gemessenen Materials ab. Mit einer Detektoranordnung 30, die energieselektiv ausgeführt ist und mit der die Streustrahlung daher spektral gemessen wird, kann auf das Vorhandensein bestimmter chemischer Elemente in der Probe geschlossen werden.

Verändert sich die Geometrie der Messanordnung, insbesondere der Abstand des zu messenden Materials zur Detektoranordnung, wird dadurch die messwertbestimmende Menge der den Detektor erreichenden Strahlung verändert. Diese Hauptfehlerquelle des Messverfahrens kann durch eine spezielle Geometrie von Strahlungsquelle, Materialbahn und Detektoranordnung minimiert und innerhalb gewisser Grenzen behoben werden.

Der Strahl wird dazu in einem Winkel α auf das flächige Material gerichtet. Änderungen des Abstands zwischen Messkopf und Materialbahn, insbesondere ein durch den Transportvorgang bewirktes vertikales Flattern, bewirken eine Positionsverschiebung des Strahlflecks auf dem flächigen Material. Zur Detektierung dieser veränderten Messgeometrie werden als Detektoranordnung 30 zwei voneinander unabhängig arbeitende Einzeldetektoren 30a und 30b eingesetzt. Diese sind so angeordnet, dass eine durch Veränderungen der Warenlagen hervorgerufene veränderte Strahlfleckposition entweder zu einem Streustrahleinfall auf den Detektor 30a bzw. auf den Detektor 30a führt. Durch die Analyse der sich in eindeutiger Weise ändernden unterschiedlichen Detektorsignale kann somit die Warenlage ermittelt werden. Hierzu kann die Summe beider Signale mit einer durch Kalibrierung gewonnenen Funktion und dem Quotienten der Detektorsignale verwendet werden. Durch eine Optimierung lassen sich auch Detektorpositionen finden, bei denen die Summe der Detektorsignale mit hinreichender Genauigkeit innerhalb gewisser Maximalwerte der Warenlagenabweichung einen von der Warenlage unabhängigen Flächengewichtswert ergeben. Die Detektoren sind in diesem Fall symmetrisch bezüglich einer durch die Richtung des Primärstrahles definierten Ebene angeordnet.

Zweckmäßigerweise wird der Strahl so in einem Winkel auf das zu messende Material gerichtet, dass ein in Traversierrichtung schmaler Strahlfleck entsteht. Der Vektor, der die Richtung des einfallenden Strahls beschreibt, hat dann eine Komponente in Richtung der Traversierbewegung. Dadurch erhält man ein örtliches Auflösungsvermögen der Anlage.

Für durchdringende Strahlung, wie beispielsweise energiereiche und damit kurzwelligere Röntgenstrahlung, kann die Schwächung der einfallenden Strahlstärke und der gestreuten Strahlung im zu messenden Material vernachlässigt werden. In diesem Fall wächst die durch die Detektoranordnung nachweisbare Strahlungsmenge ursprungslinear mit der durchstrahlten Materialmenge. Sind die Materialstärken groß oder ist der Anteil eines chemischen Elementes so hoch, dass sich Selbstabsorption bemerkbar macht, kann über eine Kalibrierung der Anlage unter Verwendung mehrerer sich im Flächengewicht und/oder der chemischen Zusammensetzung unterscheidender Kalibriernormale ein funktioneller Zusammenhang zwischen Detektorsignal und Flächengewicht bestimmt werden.

Die Funktionsfähigkeit der Messmethode hängt wesentlich von der zeitlich gleichbleibenden Stärke des einfallenden Strahls ab. Schwankungen in dessen Energieverteilung oder Intensität verändern die messwertbestimmende Menge an Streustrahlung, die im Detektor registriert wird. Es resultieren fehlerhafte Ergebnisse im Flächengewicht und/oder der chemischen Zusammensetzung. Durch in geeigneten Zeitabständen durchgeführte Zwischenkalibrierungen, die mit Hilfe eines speziellen Kalibriernormals erfolgen, kann eine Abweichung der Stärke des einfallenden Strahls korrigiert werden.

Dazu muss der Messkopf in eine Position gebracht werden, in der der einfallende Strahl auf das Kalibriernormal anstelle auf das zu messende Material fällt. Das in dieser Position erhaltene Signal und das bekannte Flächengewicht und/oder die chemische Zusammensetzung des Kalibriernormals erlauben in Verbindung mit dem bekannten funktionalen Zusammenhang beider Größen eine der momentanen Quellstärke entsprechende Kalibrierungskorrektur.

Zur Erfassung von Umweltgrößen eignet sich auch ein Röntgendetektor, der so eingesetzt wird, dass er nur Streustrahlung erfasst, die von der Streuung an Atomen und Molekülen der Umgebung stammt, ohne dass in ihm Signale erzeugt werden, die von Streuprozessen innerhalb der Probe herrühren. Bei diesem Verfahren muss die Konstanz der Quellstärke des einfallenden Strahls allerdings sichergestellt oder ständig kontrolliert werden. Dies kann prinzipiell ebenfalls mit einem Röntgendetektor geschehen, der so eingesetzt wird, das er nur Streustrahlung erfasst, die von der Streuung in einem Kalibriernormal stammt, das sich während der Messungen im Strahlengang des einfallenden Strahls befindet, ohne dass in ihm Signale erzeugt werden, die von Streuprozessen innerhalb der Probe oder von Atomen oder von Atomen oder Molekülen der Umgebung herrühren.

Die wichtigste Umweltgröße, die Dichte der Luft, kann auch durch Messung der Lufttemperatur und des Luftdrucks ermittelt werden. Da diese Methode von einer gleichbleibenden Intensität der Röntgenquelle unabhängig ist, muss sie in diesem Fall zur Ermittlung der Korrekturen nicht ständig kontrolliert werden.

Weitere Ausführungsformen ergeben sich aus den Unteransprüchen bzw. durch Fortbildungen des gezeigten Ausführungsbeispiels im Rahmen fachmännischen Handelns.

### Bezugszeichenliste

- 3: Streufleck
- 5: Materialprobe
- 10: Messkopf
- 11: Grundkörper
- 12: Strahlfenster
- 20: Strahlungsquelle
- 30: Detektoranordnung
- 30a, 30b: Teildetektoren
- 40: Umweltsensoren
- 52: Datenaufnahmeeinheit
- 70: Abschirmung

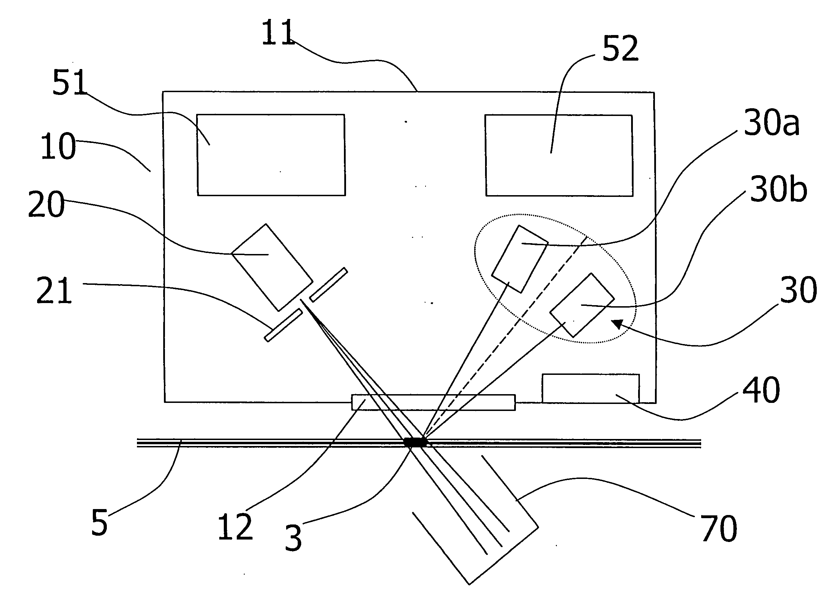

## Patentansprüche

1. Verfahren zum Bestimmen eines Flächengewichtes und/oder einer chemischen Zusammensetzung einer geförderten Materialprobe,
**dadurch gekennzeichnet, dass**
aus der Analyse eines aus einem von einer Materialprobe gestreuten Strahlanteils von Röntgenstrahlung das Flächengewicht und/oder deren chemische Zusammensetzung bestimmt wird.

2. Verfahren nach Anspruch 1,
**dadurch gekennzeichnet, dass**
die Röntgenstrahlung aus einer Strahlungsquelle auf einen Strahlfleck der Materialprobe gerichtet und die in der Materialprobe aufgrund innerer Streuprozesse erzeugte Streustrahlung von einer Detektoranordnung erfasst und ausgewertet wird.

3. Verfahren nach Anspruch 1 oder 2,
**dadurch gekennzeichnet, dass**
die Streustrahlung durch die Detektoranordnung mehrkanalig und energieselektiv registriert und spektral ausgewertet wird.

4. Verfahren nach einem der vorhergehenden Ansprüche,
**dadurch gekennzeichnet, dass**
zu einer Positionsverschiebung des Streuflecks führende Veränderungen der Warenlage der Materialprobe durch vergleichende Messungen in einer mehrteiligen Detektoranordnung registriert und für eine Messwertkorrektur verwendet werden.

5. Verfahren nach einem der vorhergehenden Ansprüche,
**dadurch gekennzeichnet, dass**
die von der Umgebungsatmosphäre erzeugte Streustrahlung detektiert wird und aus dem Detektionsergebnis Umweltgrößen, insbesondere Lufttemperatur, Luftdruck bzw. Luftfeuchtigkeit bestimmt und zu einer Korrektur des Flächengewichtsmesswertes verwendet werden.

6. Verfahren nach Anspruch 1,
**dadurch gekennzeichnet, dass**
der zurückgestreute Anteil der Röntgenstrahlung sekundäre Rückstreustrahlung ist.

7. Verfahren nach Anspruch 1,
**dadurch gekennzeichnet, dass**
der zurückgestreute Anteil der Röntgenstrahlung charakteristische Röntgenstrahlung ist.

8. Verfahren nach einem der Ansprüche 1 bis 5,
**dadurch gekennzeichnet, dass**
der zurückgestreute Anteil der Röntgenstrahlung eine Mischung aus allgemeiner Rückstreustrahlung und charakteristischer Röntgenstrahlung ist, wobei aus dem Energiespektrum der charakteristischen Röntgenstrahlung eine chemische Zusammensetzung bestimmt wird.

9. Vorrichtung zum Bestimmen eines Flächengewichtes und/oder einer chemischen Zusammensetzung einer Materialprobe,
**gekennzeichnet durch**
einen einseitig bezüglich der Materialprobe (5) angeordneten kompakten Messkopf (10), enthaltend eine in einem Winkel auf die Materialprobe gerichtete Strahlungsquelle (20) für elektromagnetische ionisierende Strahlung und eine in einem Streuwinkel angeordnete mehrteilige Detektoranordnung (30) in Verbindung mit einer Spannungsversorgung und einer Auswerteeinheit.

10. Vorrichtung nach Anspruch 9,
**dadurch gekennzeichnet, dass**
der Messkopf (10) mindestens einen Umweltsensor (40), insbesondere für eine Druck-, Temperatur- bzw. Luftfeuchtigkeitsmessung aufweist.

11. Vorrichtung nach einem der Ansprüche 9 oder 10,
**dadurch gekennzeichnet, dass**
die Detektoranordnung (30) ein mehrkanaliger energiesensitiver Zählratendetektor ausgeführt ist.

12. Vorrichtung nach einem der Ansprüche 9 bis 11,
**dadurch gekennzeichnet, dass**
die Detektoranordnung (30) mindestens aus einem bezüglich der Strahlungsquelle (20) in einem ersten auf die Warenlage sensitiven Streuwinkel angeordneten ersten Detektor (30a) und einem bezüglich der Strahlungsquelle (20) in einem zweiten auf die Warenlage sensitiven Streuwinkel angeordneten zweiten Detektor (30b) ausgebildet ist.

13. Vorrichtung nach einem der Ansprüche 10 bis 12,
**dadurch gekennzeichnet, dass**
der Umweltsensor (40) als eine auf die aus der Umgebung des Messkopfes einfallende Streustrahlung sensitive Detektoreinheit ausgebildet ist.

14. Vorrichtung nach einem der Ansprüche 9 bis 13,
**dadurch gekennzeichnet, dass**
die Vorrichtung an einer eine Fördereinrichtung für die Materialproben übergreifenden Traverse angeordnet ist.

15. Vorrichtung nach einem der Ansprüche 9 bis 14,
**dadurch gekennzeichnet, dass**
eine strahlungsabsorbierende Abschirmung (70) auf der Rückseite der Materialprobe (5) angeordnet ist.
